(19) Europäisches Patentamt
European Patent Office
Office européen des brevets

(11) **EP 2 642 316 B1**

(12) **EUROPÄISCHE PATENTSCHRIFT**

(45) Veröffentlichungstag und Bekanntmachung des Hinweises auf die Patenterteilung:
**03.01.2018 Patentblatt 2018/01**

(51) Int Cl.:
*G01S 19/07* [(2010.01)]        *G01S 19/41* [(2010.01)]

(21) Anmeldenummer: **13001364.2**

(22) Anmeldetag: **18.03.2013**

(54) **Bestimmung von Grid Ionospheric Vertical Delay Paramentern für ein Satelliten-gestützes Erweiterungssystem**

Determination of grid ionospheric vertical delay parameters for a satellite-supported expansion system

Détermination de paramètres de Grid Ionospheric Vertical Delay pour un système d'extension assisté par satellite

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.03.2012 DE 102012005549**

(43) Veröffentlichungstag der Anmeldung:
**25.09.2013 Patentblatt 2013/39**

(73) Patentinhaber: **Airbus Defence and Space GmbH 82024 Taufkirchen (DE)**

(72) Erfinder: **Trautenberg, Hans L. Dr.
D-50823 Köln (DE)**

(74) Vertreter: **Frenkel, Matthias Alexander
Wuesthoff & Wuesthoff
Patentanwälte PartG mbB
Schweigerstrasse 2
81541 München (DE)**

(56) Entgegenhaltungen:
WO-A1-99/18677          JP-A- 2002 318 271
JP-A- 2007 171 082      KR-A- 20120 092 430
US-A1- 2007 216 574     US-A1- 2013 002 482

**Beschreibung**

Die Erfindung betrifft ein Verfahren und eine Vorrichtung zum Bestimmen von Grid Ionopsheric Vertical Delay Parametern für ein Satelliten-gestütztes Erweiterungssystem gemäß Anspruch 1 bzw. 8.

Zur Steigerung der Genauigkeit der Positionsermittlung mit einem globalen Satellitennavigationssystem (GNSS: Global Navigation Satellite System) wie (NAVSTAR-)GPS, GLONASS oder dem zukünftigen europäischen Satellitennavigationssystem GALILEO werden Boden- gestützte Erweiterungssysteme (GBAS: Ground Based Augmentation System) oder Satelliten-gestützte Erweiterungssysteme (SBAS: Satellite Based Augmentation System) wie das europäische EGNOS (European Geostationary Navigation Overlay Service), das US-amerikanische WAAS (Wide Area Augmentation System) oder das japanische MSAS (Multifunctional Satellite Augmentation System) eingesetzt.

Ein SBAS setzt zusätzliche Satelliten zu einem zu erweiternden GNSS ein, die regional begrenzt Korrekturdaten aussenden, die von geeigneten Nutzungssystemen (SBAS-Empfänger) des GNSS zur Steigerung der Genauigkeit der Positionsermittlung verwendet werden können. Die ausgesendeten Korrekturdaten umfassen nicht nur Korrekturen der Positionen der Satelliten des erweiterten GNSS, sondern auch Daten zur Elektronendichte in der Ionosphäre insbesondere in Form von Elektronendichte-Karten zur Korrektur der Laufzeiten der von den GNSS-Satelliten ausgestrahlten Signale, die durch die Elektronendichte der Ionosphäre beeinflusst werden.

JP 2002 318271 A offenbart ein Verfahren zum Bestimmen von Ionospheric Delay Parametern für ein insbesondere Satelliten-gestütztes Erweiterungssystem, wobei ein virtuelles Gitter der Ionosphäre mit mehreren Punkten - IGP - vorgesehen ist und für jeden IGP des virtuellen Gitters ein IGP-Wert bestimmt wird.

WO 99/18677 A1 beschreibt eine Architektur von WAAS, die ionosphärische Korrekturwerte mit den WAAS-Daten für Nutzungssysteme von GPS und WAAS zur Verfügung stellt. Die ionosphärischen Korrekturwerte werden hierbei durch ein Kalmanfilter erzeugt.

US 2013/002482 A1 betrifft ein Verfahren und eine Vorrichtung zum Erkennen einer Plasma-Verarmung in der Ionopshäre durch Vergleichen des Ionosphärentrends in großem Umfang mit einem lokalen zeitlichen Gefälle der vertikalen oder schrägen Verzögerung. In einem Beispiel entspricht das lokale zeitliche Gefälle der Verzögerung berechneten Phasendaten, die auf GPS-Signalen von einem GPS-Empfänger extrahiert wurden, und der Trend im großen Umfang wird aus ausgesendeten Ionosphären-Gitterpunkt-Verzögerungsdaten bestimmt.

Das europäische Erweiterungssystem EGNOS umfasst ein Netzwerk von 34 RIMS (Ranging and Integrity Monitoring Station), welche Navigationssignale des erweiterten GNSS, derzeit GPS und GLONASS, empfangen. In vier redundanten MCC (Master Control Center) werden aus den Daten der RIMS Korrektur- und Integritätsdaten (EGNOS-Daten) berechnet. Die von den MCC berechneten EGNOS-Daten werden von sechs Uplink-Stationen NLES (Navigation Land Earth Station) in Form von GEO-Nachrichten an die drei geostationären EGNOS-Satelliten (GEO-Satelliten) übertragen, welche die EGNOS-Daten in Form eines Datenstroms mit EGNOS-Benutzernachrichten an Nutzungssysteme verbreiten. Zusätzlich werden die EGNOS-Daten auch über das Internet zur Verfügung gestellt, so dass bei gestörtem EGNOS-Satelliten-Empfang Nutzungssysteme mit Internetzugriff dennoch aktuelle EGNOS-Daten empfangen können.

Die Berechnung der EGNOS-Daten in einem MCC wird von einer CPF (Central Processing Facility) durchgeführt. Die EGNOS-Nachricht mit EGNOS-Daten wird von einer MGF (Message Generation Facility) im MCC erzeugt und für die Übertragung durch die Uplink-Stationen NLES zur Verfügung gestellt. Somit erzeugt jedes MCC mit seiner CPF und MGF eigene EGNOS-Nachrichten, die den NLES zur Übertragung zur Verfügung stehen.

Ein wichtiger Aspekt eines SBAS wie EGNOS ist die Verbreitung von Daten zur Elektronendichte in der Ionosphäre, die eine relativ genaue Positionsermittlung auch mit kostengünstigen Einfrequenz-Nutzungssystemen ermöglichen. EGNOS übermittelt an Nutzungssysteme mit den Nachrichttypen 18 und 26 Daten zur Elektronendichte in der Ionosphäre. Die Nachrichten vom Typ 18 enthalten hierbei Ionospheric Grid Point (IGP) Masks, also Masken der Punkte eines virtuellen Gitters der Ionosphäre (in einer Höhe von 350 km über der Erdoberfläche), und die Nachrichten vom Typ 26 Ionospheric Delay Corrections, also Korrekturen der durch die Ionosphäre beeinflussten Laufzeiten. Die IGP Masks und Ionospheric Delay Corrections können von einem Nutzungssystem ausgewertet werden, um Laufzeitkorrekturen der von GNSS-Satelliten empfangenen Signale durchführen und damit die Genauigkeit der Positionsermittlung erhöhen zu können.

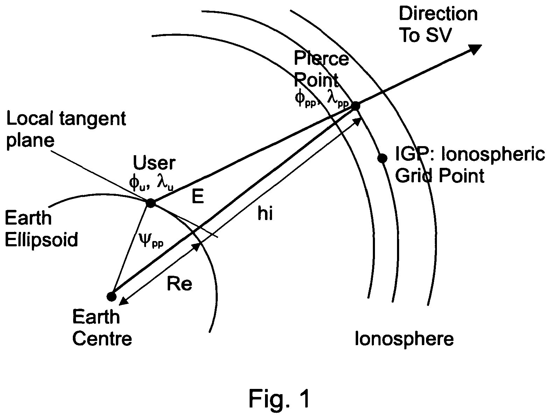

Um den durch die Ionosphäre verursachten Laufzeitfehler eines Signals (Ionospheric Correction IC) eines GNSS-Satelliten abschätzen zu können, muss ein Nutzungssystem zunächst einen Ionospheric Pierce Point (IPP) bestimmen. Der IPP ist als der Schnittpunkt zwischen einem Single Layer Modell der Ionosphäre und einer geraden Linie vom Nutzungssystem zum GNSS-Satelliten definiert, also ein Durchgangspunkt durch die Ionosphäre. Fig. 1 zeigt das Prinzip des IPP.

Die von EGNOS mit dem Nachrichtentyp 18 übermittelten IGP Masks dienen dazu, die mit dem Nachrichtentyp 26 übermittelten Ionospheric Delay Corrections mit den Punkten des virtuellen Gitters der Ionosphäre, den IGPs zu verbinden. In Fig. 1 ist beispielhaft ein IGP gezeigt. Die für IGPs von EGNOS übermittelten Ionospheric Delay Corrections umfassen für jeden IGP jeweils einen Grid Ionospheric Vertical Delay (GIVD) Parameter, der den durch die Laufzeitverzögerung in der Ionosphäre verursachten Fehler in Metern bei Satellitenposition mit 90° Elevation angibt, und einen

Grid Ionospheric Vertical Error (GIVE) Parameter, der zur Einschätzung der Integrität der GIVD Parameter dient.

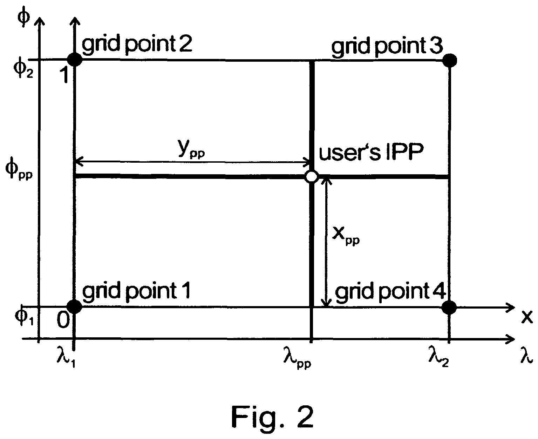

Nach Berechnung eines IPPs durch ein Nutzungssystem, das ein Signal eines GNSS-Satelliten empfängt, kann das Nutzungssystem in der Nähe des IPPs liegende IGPs auswählen, die zum Interpolieren der IC und ihrer Varianz am IPP verwendet werden. Fig. 2 zeigt das Prinzip der Interpolation eines IPPs mit Hilfe von um ihn herum lokalisierten IGPs. Für geeignete und vorgesehene Regeln für die Auswahl von zum Interpolieren geeigneter IGPs und Regeln zum Interpolieren wird auf folgendes Dokument verwiesen: Abschnitt A4.4.10.2 von Annex A des Dokuments DO-229D "Minimum Operational Performance Standards for Global Positioning System/Wide Area Augmentation System Airborne Equipment" Issued 12-13-06, prepared by SC-159, errata issued 07-31-08, herausgegeben und veröffentlicht vom Unternehmen RTCA, Inc., 1150 18th St, NW Suite, 910 Washington, DC, USA, http://www.rtca.org. Der Inhalt dieses Dokuments wird hiermit in diese Anmeldung aufgenommen.

Durch die Interpolation wird als IC eine Vertical Ionospheric Delay (VID) am IPP ermittelt, also eine Laufzeitverzögerung in vertikaler Richtung über dem Nutzungssystem bzw. im Zenit eines Satelliten. Die VID muss daher noch mit einem Obliquity Factor Fpp multipliziert werden, um die Neigung der geraden Linie vom Nutzungssystem zum GNSS-Satelliten und die dadurch veränderte IC zu berücksichtigen. Mit den in Fig. 1 dargestellten Parametern wird Fpp gemäß der folgenden Formel berechnet:

$$F_{PP} = \left[ 1 - \left( \frac{R_e \cos E}{R_e + h_I} \right)^2 \right]^{-\frac{1}{2}}$$

Die mit Fpp multiplizierte VID am IPP ergibt dann die IC am Ort des Nutzungssystems, die zu einer Pseudorange-Messung des Nutzungssystems addiert werden kann, um Einflüsse der Ionosphäre auf die Laufzeit des Signals vom GNSS-Satelliten zum Nutzungssystem zu kompensieren.

In der Praxis wird die Ionosphäre in der Regel durch das bereits oben erwähnte Single Layer Modell abgebildet, bei dem der Elektronengehalt der Ionosphäre auf eine infinitesimale Schicht in einer Höhe von 350 bzw. 450 Kilometer über der Erdoberfläche konzentriert ist, wie es in Fig. 1 durch die mit Ionosphäre bezeichneten Linien angedeutet ist. Zur Charakterisierung der Ionosphäre wird der Elektronengehalt der Ionosphäre senkrecht über der Erdoberfläche entsprechend einer Satellitenposition mit 90° Elevation verwendet. Dieser Elektronengehalt wird als Vertical Total Electron Content (vTEC) bezeichnet. Der Elektronengehalt zu anderen Elevationen abweichend von der 90° Elevation wird als Slant Total Electron Content (sTEC) bezeichnet.

Für die Ermittlung von GIVD Parametern werden durch Messungen die sTECs an den sich aus der Geometrie der Satelliten des zu erweiternden GNSS und der messenden Bodenstationen (RIMs bei EGNOS) verwendet. Standardmäßig wird dann an jedem IGP ein planares Modell an die vTECs an den IPPs angepasst. Hierzu wird ein vTEC an einem IPP aus einem sTEC am IPP durch die in Abschnitt A4.4.10.4 von Annex A des bereits oben erwähnten und in diese Anmeldung aufgenommenen Dokuments DO-229D beschriebene Vorschrift abgebildet. Hierbei wird jeder IGP unabhängig von den umliegenden IGPs bearbeitet.

Es ist nun eine Aufgabe der vorliegenden Erfindung, das Bestimmen von GIVD Parametern für ein Satelliten-gestütztes Erweiterungssystem weiter zu verbessern.

Diese Aufgabe wird durch ein Verfahren und eine Vorrichtung zum Bestimmen von Grid Ionopsheric Vertical Delay Parametern für ein Satelliten-gestütztes Erweiterungssystem mit den Merkmalen von Anspruch 1 bzw. 7 gelöst. Weitere Ausgestaltungen der Erfindung sind Gegenstand der abhängigen Ansprüche.

Nach der Erfindung werden wie bisher durch Messungen die sTECs an den sich aus der Geometrie der Satelliten eines zu erweiternden GNSS und der Bodenstationen eines SBAS ergebenden IPPs verwendet. Auch die Abbildung der sTECs zu vTECs wird wie bisher vorgenommen, insbesondere durch die in Abschnitt A4.4.10.4 von Annex A des RTCA-Dokuments DO-229D beschriebene Vorschrift. Nach einem der Erfindung zugrunde liegenden Gedanken werden nun abweichend von der bisherigen Standard-Vorgehensweise für jeden IGP ein maximaler und ein minimaler GIVD unter Einhaltung von bestimmten vorgegebenen Bedingungen ermittelt. Mit dem maximalen und dem minimalen GIVD für einen IGP wird dann ein GIVD für diesen IGP zum Übertragen bestimmt. Die vorgegebenen Bedingungen sind hierbei so gewählt, dass kein vTEC an keinem IPP größer ist als es eine Interpolation, insbesondere eine Interpolation gemäß DO-229D mit den maximalen GIVDs von ausgewählten IGPs ergibt, und kein vTEC an keinem IPP kleiner ist als es eine Interpolation, insbesondere eine Interpolation gemäß DO-229D mit den minimalen GIVDs von ausgewählten IGPs ergibt. Die erfindungsgemäß bestimmten GIVDs sind insbesondere hinsichtlich resultierender Overbounding-Biases optimal.

Eine Ausführungsform der Erfindung betrifft nun ein Verfahren zum Bestimmen von Grid Ionopsheric Vertical Delay - GIVD - Parametern für ein Satelliten-gestütztes Erweiterungssystem,

wobei ein virtuelles Gitter der Ionosphäre mit mehreren Punkten - IGP - vorgesehen ist,

wobei für jeden IGP des virtuellen Gitters ein maximaler GIVD-Parameter - maxGIVD(IGP) - und ein minimaler GIVD-Parameter - minGIVD(IGP) - bestimmt wird,

wobei für jeden IGP ein initialer maximaler GIVD-Parameter, maxGIVDO(IGP), und ein initialer minimaler GIVD-Parameter, minGIVDO(IGP), bestimmt werden, ermittelt durch Interpolation mit verschiedenen der aus Messungen ermittelten Werte für den vertikalen gesamten Elektronengehalt, vTECs, von Durchgangspunkten durch die Ionosphäre, IPPs, die um einen IGP herum angeordnet sind,

wobei mit diesen initialen maxGIVDO(IGP) und minGIVDO(IGP) durch eine erste und zweite Interpolation jeweils vTECs an den IPP ermittelt werden, für die auch die aus Messungen ermittelten vTECs vorliegen,

wobei die aus den maxGIVDO(IGP) und minGIVDO(IGP) interpolierten vTECs mit den aus Messungen ermittelten vTECs verglichen werden,

wobei das Bestimmen eines maxGIVD(IGP) für einen IGP so gewählt wird, dass kein aus Messungen ermittelter Wert für den vertikalen gesamten Elektronengehalt - vTEC - an keinem dem vTEC zugeordneten Durchgangspunkt durch die Ionosphäre - IPP - größer ist als es sich durch eine erste Interpolation mit den maxGIVD(IGP) von mehreren IGPs ergibt, die zum Interpolieren für den IPP ausgewählt wurden,

wobei das Bestimmen eines minGIVD(IGP) für einen IGP so gewählt wird, dass kein aus Messungen ermittelter vTEC an keinem dem vTEC zugeordneten IPP kleiner ist als es sich durch eine zweite Interpolation mit den minGIVD(IGP) von mehreren IGPs ergibt, die zum Interpolieren für den IPP ausgewählt wurden, und

wobei für jeden IGP aus dem jeweiligen maxGIVD(IGP) und minGIVD(IGP) ein für eine Übertragung vorgesehener GIVD-Parameter bestimmt wird.

Als die erste und/oder zweite Interpolation wird die in Abschnitt A4.4.10.4 von Annex A des Dokuments DO-229D "Minimum Operational Performance Standards for Global Positioning System/Wide Area Augmentation System Airborne Equipment" beschriebene Vorschrift zum Interpolieren verwendet.

Weiterhin können die IGPs zum Interpolieren für einen IPP insbesondere gemäß der in Abschnitt A4.4.10.2 von Annex A des Dokuments DO-229D "Minimum Operational Performance Standards for Global Positioning System/Wide Area Augmentation System Airborne Equipment" beschriebenen Vorschrift ausgewählt werden.

Ein für eine Übertragung vorgesehener GIVD-Parameter für einen IGP kann aus dem jeweiligen maxGIVD(IGP) und minGIVD(IGP) gemäß der folgenden Formel bestimmt werden:

$$GIVD = 0{,}5 * (minGIVD(IGP) + maxGIVD(IGP))$$

Das Verfahren eignet sich insbesondere für einen Einsatz im Erweiterungssystem EGNOS V3 Phase A.

Eine weitere Ausführungsform der Erfindung betrifft ein Computerprogramm mit Programmcode zur Durchführung aller Verfahrensschritte nach der Erfindung und wie hierin beschrieben, wenn das Computerprogramm in einem Computer ausgeführt wird.

Ferner betrifft eine Ausführungsform der Erfindung einen Datenträger, auf dem der von einem Computer ausführbare Programmcode des Computerprogramms nach der Erfindung und wie vorstehend beschrieben gespeichert ist.

Eine weitere Ausführungsform der Erfindung betrifft eine Vorrichtung zum Bestimmen von Grid Ionopsheric Vertical Delay - GIVD - Parametern für ein Satelliten-gestütztes Erweiterungssystem, wobei ein virtuelles Gitter der Ionosphäre mit mehreren Punkten - IGP - vorgesehen ist und die Vorrichtung aufweist:

Mittel zum Bestimmen eines maximalen GIVD-Parameters - maxGIVD(IGP) - und eines minimalen GIVD-Parameters - minGIVD(IGP) -für jeden IGP des virtuellen Gitters, wobei für jeden IGP ein initialer maximaler GIVD-Parameter, maxGIVDO(IGP), und ein initialer minimaler GIVD-Parameter, minGIVDO(IGP), bestimmt werden, ermittelt durch Interpolation mit verschiedenen der aus Messungen ermittelten Werte für den vertikalen gesamten Elektronengehalt, vTECs, von Durchgangspunkten durch die Ionosphäre, IPPs, die um einen IGP herum angeordnet sind, wobei mit diesen initialen maxGIVDO(IGP) und minGIVDO(IGP) durch eine erste und zweite Interpolation jeweils vTECs an den IPP ermittelt werden, für die auch die aus Messungen ermittelten vTECs vorliegen, wobei die aus den maxGIVDO(IGP) und minGIVDO(IGP) interpolierten vTECs mit den aus Messungen ermittelten vTECs verglichen werden, wobei die ersten Mittel derart eingerichtet sind, dass sie einen maxGIVD(IGP) für einen IGP so wählen, dass kein aus Messungen ermittelter Wert für den vertikalen gesamten Elektronengehalt - vTEC - an keinem dem vTEC zugeordneten Durchgangspunkt durch die Ionosphäre - IPP - größer ist als es sich durch eine erste Interpolation mit den maxGIVD(IGP) von mehreren IGPs ergibt, die zum Interpolieren für den IPP ausgewählt wurden, und wobei die ersten Mittel weiterhin derart eingerichtet sind, dass sie einen minGIVD(IGP) für einen IGP so wählen, dass kein aus Messungen ermittelter vTEC an keinem dem vTEC zugeordneten IPP kleiner ist als es sich durch eine zweite Interpolation mit den minGIVD(IGP) von mehreren IGPs ergibt, die zum Interpolieren für den IPP ausgewählt wurden, und

Mittel zum Bestimmen von für eine Übertragung vorgesehene GIVD-Parameter für jeden IGP aus dem jeweiligen maxGIVD(IGP) und minGIVD(IGP).

Die Vorrichtung kann zum Ausführen eines Verfahrens gemäß der Erfindung und wie hierin beschrieben ausgebildet sein.

Schließlich betrifft eine Ausführungsform der Erfindung einen Empfänger für einen Datenstrom mit GIVD-Parametern von einen Satelliten-gestützten Erweiterungssystem, wobei die GIVD-Parameter gemäß einem Verfahren nach der Erfindung und wie oben erläutert und/oder durch eine Vorrichtung nach der Erfindung und wie oben erläutert bestimmt wurden.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in

Fig. 1 das Prinzip des Ionospheric Pierce Point;

Fig. 2 das Prinzip der Interpolation eines Ionospheric Pierce Points mit Hilfe von um ihn herum lokalisierten Ionospheric Grid Points bei EGNOS; und

Fig. 3 ein GNSS und ein dieses erweiterndes SBAS.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

Im Folgenden wird die Erfindung anhand von EGNOS erläutert. Grundsätzlich eignet sich jedoch die Erfindung für jedes SBAS oder auch GBAS, das ionosphärische Korrekturdaten an Nutzungssysteme übermittelt, insbesondere GIVDs. Daher ist die Erfindung nicht als auf EGNOS beschränkt zu betrachten.

Die bereits in der Einleitung erwähnte Fig. 1 zeigt das Prinzip des IPP. Ein Nutzungssystem "User" auf der Erdoberfläche "Earth Ellipsoid" empfängt von einem GNSS-Satelliten "SV" Signale, wie durch die mit einem Pfeil symbolisierte Linie "Direction to SV" in Fig, 1 angedeutet ist. Die Funksignale des GNSS-Satelliten treten auf ihrem Weg durch die in Fig. 1 durch Linien symbolisierte Ionosphäre hindurch, die eine Laufzeitveränderungen der Funksignale und damit einen Fehler bei Pseudorange-Messungen des Nutzungssystems bewirkt. Wie bereits in der Einleitung erläutert wird die Ionosphäre zur Vereinfachung auf eine infinitesimale Schicht in einer Höhe von etwa 350 Kilometern über der Erdoberfläche ersetzt. Der Schnittpunkt der Linie "Direction to SV" mit der Ionosphären-Schicht wird als IPP bezeichnet. Für eine genaue Erläuterung der in Fig. 1 angegebenen einzelnen Größen und ihrer Beziehungen wird auf die Veröffentlichung "User Guide for EGNOS Application Developers", Ed. 1.1, 07/30/2009, im Internet abrufbar unter dem Link http://ec.europa.eu/enterprise/policies/satnav/egnos/files/cnes-user-guide-egnos-2009_en.pdf, verwiesen, der die Fig. 1 und Fig. 2 entnommen sind und deren Inhalt hiermit in diese Anmeldung aufgenommen wird.

In Fig. 1 ist ebenfalls ein IGP dargestellt, für den ein GIVD vom SBAS an das Nutzungssystem übertragen wird. Damit das Nutzungssystem den Einfluss der Ionosphäre auf Pseudorange-Messungen an seiner aktuellen Position ermitteln kann, muss es anhand der GVIDs von IGPs in der Nähe des IPPS eine IC berechnen. Dies erfolgt durch Interpolation der GVIDs von ausgewählten IGPs. In der in der Einleitung bereits erwähnten Fig. 2 ist gezeigt, wie für einen IPP vier um den IPP herum angeordneten IGPs für eine Interpolation verwendet werden. Da die so ermittelte IC jedoch einer VID entspricht, muss das Nutzungssystem den am IPP interpolierten VID noch wie in der Einleitung erläutert mit dem Obliquity Factor Fpp multiplizieren.

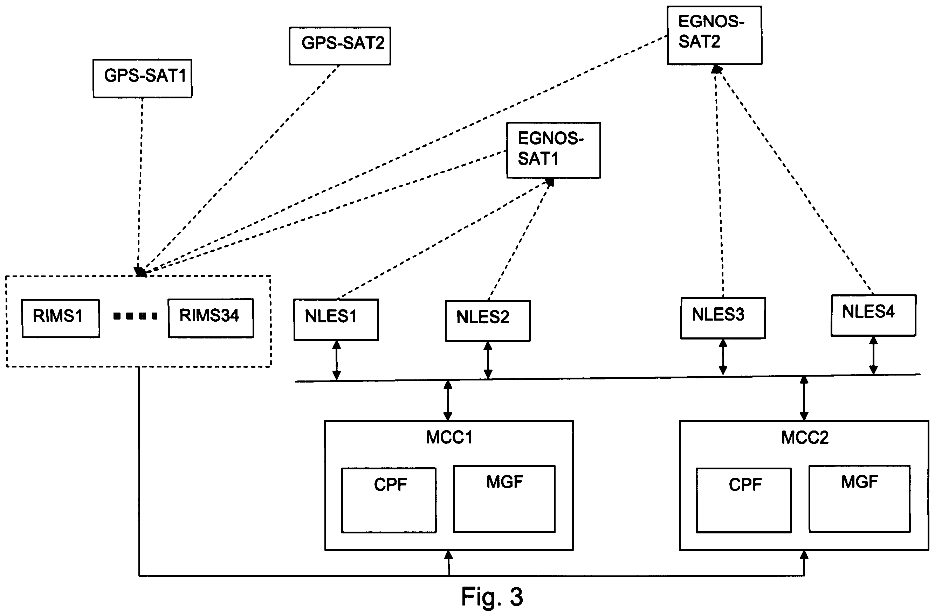

Im Folgenden wird nun kurz anhand von Fig. 3 die Architektur des SBAS EGNOS erläutert, welches das GNSS GPS erweitert, Daten zur Elektronendichte in der Ionosphäre, nämlich IGP Masks, GIVDs und GIVEs ermittelt und mit den Nachrichtentypen 18 und 26 übermittelt. Die EGNOS-Architektur ist aus Gründen der besseren Übersichtlichkeit nicht vollständig dargestellt. Anstelle von drei geostationären EGNOS-Satelliten sind nur zwei, anstelle von vier MCCs sind nur zwei und anstelle von sechs NLES sind nur vier gezeigt.

Bei EGNOs überwacht ein Netzwerk von 34 in Europa und außerhalb Europas angeordnete RIMS RIMS1-RIMS34 die Signale von GPS-Satelliten, von denen zwei Satelliten GPS-SAT1 und GPS-SAT2 beispielhaft dargestellt sind. Mit den GPS-Signalen werden von den RIMS Messungen durchgeführt, die zum Ermitteln von Korrekturdaten und Integritätsinformationen für GPS dienen.

Die Messdaten der RIMS werden an die zwei dargestellten MCCs MCC1 und MCC2 von EGNOS über Datenverbindungen übermittelt. Jedes MCC weist eine CPF und eine MGF auf. Die CPF ermittelt Korrekturdaten und Integritätsinformationen für GPS für jeden der EGNOS-Satelliten EGNOS-SAT1 und EGNOS-SAT2, die jeweils unterschiedliche Regionen mit Korrekturdaten und Integritätsinformationen versorgen.

Die MCCs MCC1 und MCC2 weisen außerdem jeweils eine MGF auf, mit der EGNOS-Nachrichten erzeugt werden, die den Uplink-Stationen zur Übertragung an die EGNOS-Satelliten EGNOS-SAT1 und EGNOS-SAT2 zur Verfügung gestellt werden.

Pro EGNOS-Satellit EGNOS-SAT1 und EGNOS-SAT2 sind jeweils zwei Uplink-Stationen NLES1 und NLES2 bzw. NLES3 und NLES4 vorgesehen, von denen eine als Redundanz dient. Die Uplink-Stationen NLES 1 und NLES3 übertragen die von einer ausgewählten CPF erzeugten und der entsprechenden MGF zur Verfügung gestellten EGNOs-Nachrichten an den jeweiligen EGNOS-Satelliten EGNOS-SAT1 bzw. EGNOS-SAT2, die wiederum einen Datenstrom mit EGNOs-Benutzernachrichten in der von ihnen versorgten Region verbreiten.

Die von den RIMs durchgeführten Messungen werden in den CPFs der MCCs erfindungsgemäß verarbeitet, um die Daten zur Elektronendichte in der Ionosphäre zu ermitteln und ionosphärische Korrekturdaten in Form der GVIDs und der GIVEs von den EGNOS-Satelliten EGNOS-SAT1 und EGNOS-SAT2 verbreiten zu lassen, wie im nachfolgend anhand eines Beispiels erläutert wird. Hierzu weisen die CPFs geeignete Mittel auf, insbesondere Berechnungsmittel zum Verarbeiten der RIMS-Messungen und zum Bestimmen ionosphärischer Korrekturdaten. Die Mittel der CPFs können beispielsweise Computer sein, die zum Ausführen von das erfindungsgemäße Verfahren implementierenden Computerprogrammen konfiguriert sind.

Aus der Geometrie des Satelliten GPS-SAT1, insbesondere seiner aktuellen Position im Raum, und der RIMS RIMS1, insbesondere ihrer bekannten Position auf der Erdoberfläche, wird von der CPF des ersten MCC1 ein $IPP_{RIMS1-GPS-SAT1}$ ermittelt. Weiterhin ermittelt die CPF anhand der Messungen der von der RIMS RIMS1 empfangenen Signale des Satelliten GPS-SAT1 am $IPP_{RIMS1-GPS-SAT1}$ den $sTEC(IPP_{RIMS1-GPS-SAT1})$, beispielsweise durch eine Zweifrequenzmessung.

Diese Ermittlung von sTECs für IPPs führt die CPF für alle von den RIMS RIMS1-RIMS34 durchgeführten und übermittelten Messungen durch. Als Ergebnis liegt ein Gitter von IPPs und ihrer ermittelten $sTECs(IPP_{RIMSx-GPS-SATx})$ vor.

Die CPF bildet nun die so ermittelten $sTECS(IPP_{RIMSx-GPS-SATx})$ durch eine geeignete Vorschrift auf $vTECS(IPP_{RIMSx-GPS-SATx})$ ab, insbesondere durch die in Abschnitt A4.4.10.4 von Annex A des RTCA-Dokuments DO-229D beschriebene Vorschrift. Als Ergebnis dieser Abbildung liegt das Gitter von IPPs mit den einzelnen IPPs zugeordneten $sTECs(IPP_{RIMSx-GPS-SATx})$ vor.

Nun bestimmt die CPF für jeden IGP eines vorgesehenen virtuellen Gitters der Ionosphäre wie folgt einen maximalen GIVD-Parameter maxGIVD(IGP) und einen minimalen GIVD-Parameter minGIVD(IGP).

Das Bestimmen eines maxGIVD(IGP) wird für einen IGP so gewählt, dass kein vTEC an keinem IPP größer ist als es sich durch eine erste Interpolation mit den maxGIVD(IGP) von mehreren IGPs ergibt, die zum Interpolieren für den IPP ausgewählt wurden.

Das Bestimmen eines minGIVD(IGP) wird für einen IGP ferner so gewählt, dass kein vTEC an keinem IPP kleiner ist als es sich durch eine zweite Interpolation mit den minGIVD(IGP) von mehreren IGPs ergibt, die zum Interpolieren für den IPP ausgewählt wurden

Zum Bestimmen von maxGIVDs und minGIVDs kann beispielsweise zunächst für jeden IGP ein initialer maxGIVDO(IGP) und ein initialer minGIVDO(IGP) bestimmt werden, beispielsweise ermittelt durch Interpolation mit verschiedenen der aus Messungen ermittelten $vTECs(IPP_{RIMSx-GPS-SATx})$ von IPPs, die um einen IGP herum angeordnet sind. Dann können mit diesen initialen maxGIVDO(IGP) und minGIVDO(IGP) durch die erste bzw. zweite Interpolation, die beispielsweise durch die im RTCA-Dokument DO-229D beschriebene Interpolationsvorschrift implementiert sein können, jeweils vTECs(interpoliert, IPP) an den $IPP_{RIMSx-GPS-SATx}$ ermittelt werden, für die auch die aus Messungen ermittelten $vTECS(IPP_{RIMSx-GPS-SATx})$ vorliegen. Die aus den initialer maxGIVDO(IGP) bzw. minGIVDO(IGP) interpolierten vTECs(interpoliert, IPP) können anschließend mit den aus Messungen ermittelten $vTECs(IPP_{RIMSx-GPS-SATx})$ verglichen und so eingestellt werden, dass die Bedingungen erfüllt sind, dass an keinem IPP kein $vTECs(IPP_{RIMsx-GPS-SATx})$ größer als ein durch Interpolation mit maxGIVD(IGP) ermittelter vTEC ist und kein $vTECS(IPP_{RIMSx-GPS-SATx})$ kleiner als ein durch Interpolation mit minGIVD(IGP) ermittelter vTEC ist.

Aus den bestimmten minGIVD(IGP) und mxGIVD(IGP) bestimmt die CPF schließlich für jeden IGP einen GIVD(IGP), der zur Übertragung an Nutzungssysteme vorgesehen ist. Insbesondere kann der GIVD für jeden IGP durch die folgenden Formel bestimmt werden:

$$GIVD(IGP) = 0{,}5 * (minGIVD(IGP) + maxGIVD(IGP))$$

Die so bestimmten und für die Übermittlung vorgesehenen GIVDs werden dann von der CPF an die MGF eines MCC übermittelt, welche aus den GIVDs zusammen mit weiteren Daten zur Ionospheric Delay Corrections EGNOS-

Nachrichten vom Typ 26 erzeugt und an die NLES NLES1-4 übermittelt, welche die EGNOS-Nachrichten vom Typ 26 an Nutzungssysteme über die EGNOS-Satelliten EGNOS-SAT1 und EGNOS-SAT2 verbreitet.

Mit der vorliegenden Erfindung können optimierte GIVD-Parameter für ein insbesondere Satelliten-gestütztes Erweiterungssystem ermittelt werden, die insbesondere in Bezug auf resultierende overbounding Biases optimal bestimmt sind.

BEZUGSZEICHEN UND AKRONYME

| | |
|---|---|
| GPS-SAT1 | GPS-Satellit |
| GPS-SAT2 | GPS-Satellit |
| EGNOS-SAT1 | EGNOS-Satellit |
| EGNOS-SAT2 | EGNOS-Satellit |
| RIMS1-RIMS34 | Netzwerk von RIMS |
| NLES1 | NLES-Uplink-Station |
| NLES2 | NLES-Uplink-Station |
| NLES3 | NLES-Uplink-Station |
| NLES4 | NLES-Uplink-Station |
| MCC1 | erstes MCC |
| MCC2 | zweites MCC |

| | |
|---|---|
| CPF | Central Processing Facility |
| EGNOS | European Geostationary Navigation Overlay Service |
| GBAS | Ground Based Augmentation System |
| GIVD | Grid Ionospheric Vertical Delay |
| GIVE | Grid Ionospheric Vertical Error |
| GNSS | Global Navigation Satellite System |
| IC | Ionospheric Correction |
| IGP | Ionospheric Grid Point |
| IPP | Ionospheric Pierce Point |
| MCC | Master Control Center |
| MGF | Message Generation Facility |
| MSAS | Multifunctional Satellite Augmentation System |
| NLES | Navigation Land Earth Station |
| SBAS | Satellite Based Augmentation System |
| sTEC | Slant Total Electron Content |
| vTEC | Vertical Total Electron Content |
| VID | Vertical Ionospheric Delay |
| WAAS | Wide Area Augmentation System |

**Patentansprüche**

1. Verfahren zum Bestimmen von Grid Ionopsheric Vertical Delay, GIVD, Parametern für ein insbesondere Satelliten-gestütztes Erweiterungssystem,
   wobei ein virtuelles Gitter der Ionosphäre mit mehreren Punkten Ionospheric Grid Point, IGP, vorgesehen ist, wobei für jeden IGP des virtuellen Gitters ein maximaler GIVD-Parameter, maxGIVD(IGP), und ein minimaler GIVD-Parameter, minGIVD(IGP), bestimmt wird,
   wobei für jeden IGP ein initialer maximaler GIVD-Parameter, maxGIVDO(IGP), und ein initialer minimaler GIVD-Parameter, minGIVDO(IGP), bestimmt werden, ermittelt durch Interpolation mit verschiedenen aus Messungen ermittelten Werten für den vertikalen gesamten Elektronengehalt, vTECs, von Durchgangspunkten durch die Ionosphäre, IPPs, die um den IGP herum angeordnet sind,
   wobei mit diesen initialen maxGIVDO(IGP) und minGIVDO(IGP) durch eine erste und zweite Interpolation jeweils vTECs an den IPP ermittelt werden, für die auch die aus Messungen ermittelten vTECs vorliegen,
   wobei die aus den maxGIVDO(IGP) und minGIVDO(IGP) interpolierten vTECs mit den aus Messungen ermittelten vTECs verglichen werden,
   wobei der maxGIVD(IGP) für einen IGP so gewählt wird, dass kein aus Messungen ermittelter vTEC an keinem dem vTEC zugeordneten IPP größer ist als es sich durch eine erste Interpolation mit den maxGIVD(IGP) von mehreren IGPs ergibt, die zum Interpolieren für den IPP ausgewählt wurden,

wobei der minGIVD(IGP) für einen IGP so gewählt wird,

dass kein aus Messungen ermittelter vTEC an keinem dem vTEC zugeordneten IPP kleiner ist als es sich durch eine zweite Interpolation mit den minGIVD(IGP) von mehreren IGPs ergibt, die zum Interpolieren für den IPP ausgewählt wurden,

wobei für jeden IGP aus dem jeweiligen maxGIVD(IGP) und minGIVD(IGP) ein für eine Übertragung vorgesehener GIVD-Parameter bestimmt wird, und wobei für die erste Interpolation und zweite Interpolation die IGPs zum Interpolieren für einen IPP gemäß der in Abschnitt A4.4.10.2 von Annex A des Dokuments DO-229D" Minimum Operational Performance Standards for Global Positioning System/Wide Area Augmentation System Airborne Equipment", Veröffentlichungsjahr 2006, beschriebenen Vorschrift ausgewählt werden.

2. Verfahren nach Anspruch 1, wobei als die erste und die zweite Interpolation die in Abschnitt A4.4.10.4 von Annex A des Dokuments DO- 229D" Minimum Operational Performance Standards for Global Positioning System/Wide Area Augmentation System Airborne Equipment", Veröffentlichungsjahr 2006, beschriebene Vorschrift zum Interpolieren verwendet wird.

3. Verfahren nach Anspruch 1 oder 2, wobei der für die Übertragung vorgesehene GIVD-Parameter für einen IGP aus dem jeweiligen maxGIVD(IGP) und minGIVD(IGP) gemäß der folgenden Formel bestimmt wird:

$$GIVD = 0{,}5 * (minGIVD(IGP) + maxGIVD(IGP))$$

4. Verfahren nach Anspruch 1, 2 oder 3, das im Erweiterungssystem EGNOS V3 Phase A eingesetzt wird.

5. Computerprogramm umfassend einen Programmcode, der bei Ausführung durch einen Computer diesen veranlasst, alle Verfahrensschritte eines Verfahrens gemäß einem der Ansprüche 1 bis 4 auszuführen.

6. Datenträger, auf dem der von einem Computer ausführbare Programmcode des Computerprogramms nach Anspruch 5 gespeichert ist.

7. Vorrichtung (CPF) zum Bestimmen von Grid Ionopsheric Vertical Delay, GIVD, Parametern für ein insbesondere Satelliten-gestütztes Erweiterungssystem, wobei ein virtuelles Gitter der Ionosphäre mit mehreren Punkten Ionospheric Grid Point, IGP, vorgesehen ist,

wobei die Vorrichtung erste Mittel zum Bestimmen eines maximalen GIVD-Parameters, maxGIVD(IGP), und eines minimalen GIVD-Parameters, minGIVD(IGP), für jeden IGP des virtuellen Gitters aufweist, wobei die ersten Mittel derart eingerichtet sind, dass für jeden IGP ein initialer maximaler GIVD-Parameter, maxGIVDO(IGP), und ein initialer minimaler GIVD-Parameter, minGIVDO(IGP), bestimmt werden, ermittelt durch Interpolation mit verschiedenen aus Messungen ermittelten Werten für den vertikalen gesamten Elektronengehalt, vTECs, von Durchgangspunkten durch die Ionosphäre, IPPs, die um den IGP herum angeordnet sind, dass mit diesen initialen maxGIVDO(IGP) und minGIVDO(IGP) durch eine erste und zweite Interpolation jeweils vTECs an den IPP ermittelt werden, für die auch die aus Messungen ermittelten vTECs vorliegen, dass die aus den maxGIVDO(IGP) und minGIVDO(IGP) interpolierten vTECs mit den aus Messungen ermittelten vTECs verglichen werden, dass sie einen maxGIVD(IGP) für einen IGP so wählen, dass kein aus Messungen ermittelter vTEC an keinem dem vTEC zugeordneter IPP größer ist als es sich durch eine erste Interpolation mit den maxGIVD(IGP) von mehreren IGPs ergibt, die zum Interpolieren für den IPP ausgewählt wurden, und wobei die ersten Mittel weiterhin derart eingerichtet sind, dass sie einen minGIVD(IGP) für einen IGP so wählen, dass kein aus Messungen ermittelter vTEC an keinem dem vTEC zugeordneten IPP kleiner ist als es sich durch eine zweite Interpolation mit den minGIVD(IGP) von mehreren IGPs ergibt, die zum Interpolieren für den IPP ausgewählt wurden, und die Vorrichtung zweite Mittel aufweist, die zum Bestimmen von für eine Übertragung vorgesehene GIVD-Parameter für jeden IGP aus dem jeweiligen maxGIVD(IGP) und minGIVD(IGP) eingerichtet sind, und wobei für die erste Interpolation und zweite Interpolation die IGPs zum Interpolieren für einen IPP gemäß der in Abschnitt A4.4.10.2 von Annex A des Dokuments DO-229D" Minimum Operational Performance Standards for Global Positioning System/Wide Area Augmentation System Airborne Equipment", Veröffentlichungsjahr 2006, beschriebenen Vorschrift ausgewählt werden.

8. Vorrichtung nach Anspruch 7,
**dadurch gekennzeichnet, dass**

sie zum Ausführen eines Verfahrens gemäß einem der Ansprüche 1 bis 4 ausgebildet ist.

**Claims**

1. A method for determining grid ionospheric vertical delay (GIVD) parameters for an in particular satellite-assisted augmentation system,
   wherein a virtual grid of the ionosphere having multiple ionospheric grid points (IGP) is provided,
   wherein a maximum GIVD parameter (maxGIVD(IGP)) and a minimum GIVD parameter (minGIVD(IGP)) are determined for each IGP of the virtual grid,
   wherein for each IGP an initial maximum GIVD parameter (maxGIVD0(IGP)) and an initial minimum GIVD parameter (minGIVD0(IGP)) are determined, ascertained by interpolation with various values, ascertained from measurements, for the vertical total electron content (vTECs) of ionosphere pierce points (IPPs) situated around the IGP,
   wherein with this initial maxGIVDO(IGP) and minGIVDO(IGP), by means of a first and second interpolation in each case vTECs for the IPP are ascertained for which vTECs that are ascertained from measurements are also present,
   wherein the vTECs interpolated from the maxGIVDO(IGP) and minGIVDO(IGP) are compared to the vTECs ascertained from measurements,
   wherein the maxGIVD(IGP) for an IGP is selected in such a way that no vTEC, ascertained from measurements, for any IPP associated with the vTEC is greater than that resulting from a first interpolation with the maxGIVD(IGP) of multiple IGPs that were selected for interpolation for the IPP,
   wherein the minGIVD(IGP) for an IGP is selected in such a way that no vTEC, ascertained from measurements, for any IPP associated with the vTEC is less than that resulting from a second interpolation with the minGIVD(IGP) of multiple IGPs that were selected for interpolation for the IPP,
   wherein for each IGP, a GIVD parameter that is provided for a transmission is determined from the particular maxGIVD(IGP) and minGIVD(IGP), and
   wherein for the first interpolation and second interpolation, the IGPs for interpolation for an IPP are selected according to the specification described in Section A4.4.10.2 of Annex A of the document DO-229D, "Minimum Operational Performance Standards for Global Positioning System/Wide Area Augmentation System Airborne Equipment," publication year 2006.

2. The method according to Claim 1,
   wherein the specification for interpolation described in Section A4.4.10.4 of Annex A of the document DO-229D, "Minimum Operational Performance Standards for Global Positioning System/Wide Area Augmentation System Airborne Equipment," publication year 2006, is used as the first and the second interpolation.

3. The method according to Claim 1 or 2,
   wherein the GIVD parameter for an IGP that is provided for the transmission is determined from the particular maxGIVD(IGP) and minGIVD(IGP) according to the formula:

$$GIVD = 0.5 * (minGIVD(IGP) + maxGIVD(IGP))$$

4. The method according to Claim 1, 2, or 3, which is used in the EGNOS V3 Phase A augmentation system.

5. A computer program including a program code which when executed by a computer causes the computer to carry out all method steps of a method according to one of Claims 1 to 2.

6. A data medium on which the program code of the computer program according to Claim 5 which is executable by a computer is stored.

7. A device (CPF) for determining grid ionospheric vertical delay (GIVD) parameters for an in particular satellite-assisted augmentation system, wherein a virtual grid of the ionosphere having multiple ionospheric grid points (IGP) is provided,
   wherein the device has first means for determining a maximum GIVD parameter (maxGIVD(IGP)) and a minimum GIVD parameter (minGIVD(IGP)) for each IGP of the virtual grid,
   wherein the first means are configured in such a way that for each IGP, an initial maximum GIVD parameter (maxGIVD0(IGP)) and an initial minimum GIVD parameter (minGIVD0(IGP)) are determined, ascertained by interpolation with various values, ascertained from measurements, for the vertical total electron content (vTECs) of ionosphere pierce points (IPPs) situated around the IGP,

with this initial maxGIVDO(IGP) and minGIVDO(IGP), by means of a first and second interpolation in each case vTECs for the IPP are ascertained for which vTECs that are ascertained from measurements are also present,

the vTECs interpolated from the maxGIVDO(IGP) and minGIVDO(IGP) are compared to the vTECs ascertained from measurements,

the first means select a maxGIVD(IGP) for an IGP in such a way that no vTEC, ascertained from measurements, for any IPP associated with the vTEC is greater than that resulting from a first interpolation with the maxGIVD(IGP) of multiple IGPs that were selected for interpolation for the IPP, and wherein the first means are further configured in such a way that they select a minGIVD(IGP) for an IGP in such a way that no vTEC, ascertained from measurements, for any IPP associated with the vTEC is less than that resulting from a second interpolation with the minGIVD(IGP) of multiple IGPs that were selected for interpolation for the IPP,

and the device has second means that are configured for determining GIVD parameters, provided for a transmission, for each IGP from the particular maxGIVD(IGP) and minGIVD(IGP), and

wherein for the first interpolation and second interpolation, the IGPs for interpolation for an IPP are selected according to the specification described in Section A4.4.10.2 of Annex A of the document DO-229D, "Minimum Operational Performance Standards for Global Positioning System/Wide Area Augmentation System Airborne Equipment," publication year 2006.

8. The device according to Claim 7,
**characterized in that**
the device is designed for carrying out a method according to one of Claims 1 to 4.

## Revendications

1. Procédé de détermination de paramètres de retard vertical ionosphérique de grille, GIVD, pour un système d'extension en particulier assisté par satellite,
dans lequel une grille virtuelle de la ionosphère avec plusieurs points de type point de grille ionosphérique, IGP, est prévue,
dans lequel, pour chaque IGP de la grille virtuelle, un paramètre GIVD maximal, maxGIVD(IGP), et un paramètre GIVD minimal, minGIVD(IGP), sont définis,
dans lequel, pour chaque IGP, un paramètre GIVD maximal initial, maxGIVDO(IGP), et un paramètre GIVD minimal initial, minGIVDO(IGP), sont définis, qui sont déterminés par interpolation avec différentes valeurs déterminées à partir de mesures pour la teneur en électrons totale verticale, vTEC, de points de passage à travers la ionosphère, IPP, disposés autour de l'IGP,
dans lequel, avec ces paramètres initiaux maxGIVDO(IGP) et minGIVDO(IGP), par une première et une deuxième interpolation, respectivement des vTEC au niveau des IPP pour lesquels on dispose également de vTEC déterminées à partir de mesures sont déterminées,
dans lequel les vTEC interpolées à partir de maxGIVDO(IGP) et minGIVDO(IGP) sont comparées aux vTEC déterminées à partir de mesures,
dans lequel le paramètre maxGIVD(IGP) pour un IGP est choisi de telle sorte qu'aucune vTEC déterminée à partir de mesures au niveau d'aucun IPP attribué à la vTEC n'est supérieure au résultat obtenu par une première interpolation avec les maxGIVD(IGP) de plusieurs IGP sélectionnés pour interpoler l'IPP,
dans lequel le paramètre minGIVD(IGP) pour un IGP est choisi de telle sorte qu'aucune vTEC déterminée à partir de mesures au niveau d'aucun IPP attribué à la vTEC n'est inférieure au résultat obtenu par une deuxième interpolation avec les minGIVD(IGP) de plusieurs IGP sélectionnés pour interpoler l'IPP,
dans lequel pour chaque IGP, un paramètre GIVD prévu pour une transmission est déterminé à partir du maxGIVD(IGP) et minGIVD(IGP) respectif, et
dans lequel, pour la première interpolation et la deuxième interpolation, les IGP pour interpoler un IPP sont sélectionnés selon la spécification décrite dans la partie A4.4.10.2 de l'annexe A du document DO-229D « Minimum Operational Performance Standards for Global Positioning System/ Wide Area Augmentation System Airborne Equipment », année de publication 2006.

2. Procédé selon la revendication 1, dans lequel la spécification décrite dans la partie A4.4.10.4 de l'annexe A du document DO-229D « Minimum Operational Performance Standards for Global Positioning System/ Wide Area Augmentation System Airborne Equipment », année de publication 2006, est utilisée en tant première et deuxième interpolation.

**3.** Procédé selon la revendication 1 ou 2, dans lequel le paramètre GIVD prévu pour la transmission pour un IGP est déterminé à partir du maxGIVD(IGP) et min-GIVD(IGP) respectif selon la formule suivante :

$$GIVD = 0,5 * (minGIVD(IGP) + maxGIVD(IGP))$$

**4.** Procédé selon la revendication 1, 2 ou 3, mis en oeuvre dans le système d'extension EGNOS V3 phase A.

**5.** Programme informatique, comprenant un code de programmation qui, lorsqu'il est exécuté par un ordinateur, fait que celui-ci exécute toutes les étapes de procédé d'un procédé selon l'une quelconque des revendications précédentes 1 à 4.

**6.** Support de données sur lequel est stocké le code de programmation, exécutable par ordinateur, du programme informatique selon la revendication 5.

**7.** Dispositif (CPF) pour déterminer des paramètres de retard vertical ionosphérique de grille, GIVD, pour un système d'extension en particulier assisté par satellite, dans lequel une grille virtuelle de la ionosphère avec plusieurs points de type point de grille ionosphérique, IGP, est prévue,
ledit dispositif disposant de premiers moyens pour déterminer un paramètre GIVD maximal, maxGIVD(IGP), et un paramètre GIVD minimal, minGIVD(IGP), pour chaque IGP de la grille virtuelle,
lesdits premiers moyens étant agencés de telle sorte
que pour chaque IGP, un paramètre GIVD maximal initial, maxGIVDO(IGP), et un paramètre GIVD minimal initial, minGIVDO(IGP), sont définis, qui sont déterminés par interpolation avec différentes valeurs déterminées à partir de mesures pour la teneur en électrons totale verticale, vTEC, de points de passage à travers la ionosphère, IPP, disposés autour de l'IGP,
qu'avec ces paramètres initiaux maxGIVDO(IGP) et minGIVDO(IGP), par une première et une deuxième interpolation, respectivement des vTEC au niveau des IPP pour lesquels on dispose également de vTEC déterminées à partir de mesures sont déterminées,
que les vTEC interpolées à partir de maxGIVDO(IGP) et minGIVDO(IGP) sont comparées aux vTEC déterminées à partir de mesures,
qu'ils choisissent un maxGIVD(IGP) pour un IGP de telle sorte qu'aucune vTEC déterminée à partir de mesures au niveau d'aucun IPP attribué à la vTEC n'est supérieure au résultat obtenu par une première interpolation avec les maxGIVD(IGP) de plusieurs IGP sélectionnés pour interpoler l'IPP, et lesdits premiers moyens étant en outre agencés de telle sorte qu'ils choisissent un minGIVD(IGP) pour un IGP de telle sorte qu'aucune vTEC déterminée à partir de mesures au niveau d'aucun IPP attribué à la vTEC n'est inférieure au résultat obtenu par une deuxième interpolation avec les minGIVD(IGP) de plusieurs IGP sélectionnés pour interpoler l'IPP,
et le dispositif présente des deuxièmes moyens agencés pour déterminer un paramètre GIVD prévu pour une transmission à partir du maxGIVD(IGP) et min-GIVD(IGP) respectif, et
dans lequel, pour la première interpolation et la deuxième interpolation, les IGP pour interpoler un IPP sont sélectionnés selon la spécification décrite dans la partie A4.4.10.2 de l'annexe A du document DO-229D « Minimum Operational Performance Standards for Global Positioning System/ Wide Area Augmentation System Airborne Equipment », année de publication 2006.

**8.** Dispositif selon la revendication 7, **caractérisé en ce qu'**il est réalisé pour effectuer un procédé selon l'une quelconque des revendications précédentes 1 à 4.

Fig. 1

Fig. 2

Fig. 3

EP 2 642 316 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2002318271 A
- WO 9918677 A1

- US 2013002482 A1

**In der Beschreibung aufgeführte Nicht-Patentliteratur**

- **VERÖFFENTLICHUNG.** User Guide for EGNOS Application Developers. 30. Juli 2009